# EUROPEAN PATENT APPLICATION

(11) **EP 4 694 546 A1**
(43) Date of publication of application: **11.02.2026**
(21) Application number: 24822327.3
(22) Date of filing: 20.03.2024
(51) Int. Cl.: H04W 76/10

(54) **NETWORK CONNECTION CONTROL METHOD, AND TERMINAL DEVICE AND STORAGE MEDIUM**

(30) Priority: 14.06.2023 CN 202310708990
(71) Applicant: Honor Device Co., Ltd., Shenzhen, Guangdong 518040 (CN)
(72) Inventor: HE, Xuan, Shenzhen, Guangdong 518040 (CN); YANG, Yong, Shenzhen, Guangdong 518040 (CN); ZHANG, Yi, Shenzhen, Guangdong 518040 (CN)
(74) Representative: Thun, Clemens
(86) International application number: PCT/CN2024/082793
(87) International publication number: WO 2024/255371

(57) **Abstract**

This application relates to a network connection control method, a terminal device, and a storage medium. The terminal device acquires network hotspot information of a second network when connected to a first network, where a network rate of the second network is higher than a network rate of the first network. A prompt message is sent to prompt that a network hotspot of the second network exists for a user to connect to if the acquired network hotspot information of the second network satisfies a preset condition, so that it is convenient for the user to manually switch a network connected to the terminal device to the second network with a higher network rate or a better network signal quality. In this way, the network rate and the network signal quality of the terminal device are improved. The terminal device is automatically connected to the second network if it is detected that the terminal device is not connected to the second network within preset time after the prompt message is sent, so as to automatically switch the network of the terminal device to the second network, so that the terminal device can be connected to a network with a highest rate.

## Description

### CROSS-REFERENCE TO RELATED APPLICATIONS

This application claims priority to Chinese Patent Application No. 202310708990.3, filed in China on June 14, 2023 and entitled "NETWORK CONNECTION CONTROL METHOD, TERMINAL DEVICE, AND STORAGE MEDIUM", which is incorporated herein by reference in its entirety.

### TECHNICAL FIELD

This application relates to the field of communication, and in particular, to a network connection control method, a terminal device, and a storage medium.

### BACKGROUND

An existing terminal device may be connected to different Wi-Fi networks, for example, may be connected to a 2.4G network or a 5G network. However, when using the terminal device, a user usually fixedly connects the terminal device at a frequency band, for example, fixedly connects the terminal device to the 2.4G network or the 5G network. However, performance of Wi-Fi networks in different frequency bands is different. For example, a network rate of the 2.4G network is less than a network rate of the 5G network, and the penetrating power and signal radiation capability of the 5G network are also inferior to those of the 2.4G network. If the terminal device is fixedly connected to the 2.4G network, a service of a high network rate of the 5G network cannot be acquired. If the terminal device is fixedly connected to the 5G network, when a signal of the 5G network is blocked, the penetrating power and radiation capability of the signal of the 5G network is weakened, resulting in a low network rate, and affecting the Internet surfing experience of the user.

### SUMMARY

In view of the foregoing content, it is necessary to provide a network connection control method, a terminal device, and a storage medium, to resolve a technical problem that a terminal device is fixedly connected to a Wi-Fi network, resulting in that Wi-Fi network switching cannot be implemented when a network rate of the Wi-Fi network is low.

According to a first aspect, an embodiment of this application provides a network connection control method, applied to a terminal device, including: acquiring, by the terminal device, network hotspot information of a second network when connected to a first network, wherein a network rate of the second network is higher than a network rate of the first network, the first network and the second network are networks in different frequency bands in at least one dual-frequency router, and the at least one dual-frequency router separately set a network hotspot of the first network and a network hotspot of the second network; sending a prompt message to prompt that the network hotspot of the second network exists if it is determined that the network hotspot information of the second network satisfies a preset condition; and connecting the terminal device to the second network if it is detected that the terminal device is not connected to the second network within preset time after the prompt message is sent. In the foregoing solution, when the terminal device is connected to the first network, if the acquired network hotspot information of the second network satisfies the preset condition, a prompt message is sent to prompt that the network hotspot of the second network exists for a user to connect to, so that it is convenient for the user to manually switch a network connected to the terminal device to the second network with a higher network rate or a better network signal quality. In this way, the network rate and the network signal quality of the terminal device are improved. In addition, the terminal device is automatically connected to the second network if it is detected that the terminal device is not connected to the second network within preset time after the prompt message is sent, so as to automatically switch the network of the terminal device to the second network, so that the terminal device can be connected to a network with a highest rate.

In an embodiment of this application, the acquiring network hotspot information of a second network includes: receiving broadcast information sent by a network device of the second network; and parsing the network hotspot information of the second network from the broadcast information, where the network hotspot information of the second network includes a device identification number of the network device of the second network, an identification number of the network hotspot of the second network, and a network identification number of the second network. In the foregoing solution, the terminal device acquires the network hotspot information of the second network by scanning surrounding broadcast information.

In an embodiment of this application, the method further includes: acquiring a device identification number of a network device of the first network, an identification number of the network hotspot of the first network, and a network identification number of the first network.

In an embodiment of this application, the determining that the network hotspot information of the second network satisfies a preset condition includes: determining that the network hotspot information of the second network satisfies the preset condition if the device identification number of the network device of the second network is the same as the device identification number of the network device of the first network and the identification number of the network hotspot of the second network is the same as the identification number of the network hotspot of the first network. In the foregoing solution, it may be determined that the second network and the first network are from a same network device if the device identification number of the network device of the second network is the same as the device identification number of the network device of the first network, and the identification number of the network hotspot of the second network is the same as the identification number of the network hotspot of the first network. In this way, it is convenient for the terminal device to perform network switching between Wi-Fi networks of the same network device.

In an embodiment of this application, the determining that the network hotspot information of the second network satisfies a preset condition includes: determining that the network hotspot information of the second network satisfies the preset condition if the device identification number of the network device of the second network is different from the device identification number of the network device of the first network but the network identification number of the second network matches the network identification number of the first network. In the foregoing solution, it indicates that the second network and the first network belong to a network of a same user if the device identification number of the network device of the second network is different from the device identification number of the network device of the first network, but the network identification number of the second network matches the network identification number of the first network. In this way, it is convenient for a mobile phone to perform network switching between the first network and the second network.

In an embodiment of this application, the matching the network identification number of the second network with the network identification number of the first network includes the following: partial fields of the network identification number of the second network are the same as those of the network identification number of the first network.

In an embodiment of this application, the connecting the terminal device to the second network includes: acquiring a login password of the first network if it is detected that the terminal device is in a screen-off state; and sending a connection request carrying the login password of the first network to the network hotspot of the second network, and connecting to the network hotspot of the second network after verification of the login password succeeds. In the foregoing solution, the terminal device is connected to the network hotspot of the second network when the terminal device is in the screen-off state. In this way, automatic network connection or switching can be implemented in a state that is not perceived by the user.

In an embodiment of this application, after the sending a connection request carrying the login password of the first network to the network hotspot of the second network, and connecting to the network hotspot of the second network after verification of the login password succeeds, the method further includes: disconnecting a connection between the terminal device and the second network, and recording the network hotspot information of the second network in a network list; and sending the connection request carrying the login password of the first network to the network hotspot of the first network, and connecting to the network hotspot of the first network after verification of the login password succeeds. According to the foregoing technical solution, after the connection between a terminal device and a second network is disconnected, the terminal device is reconnected to the network hotspot of the first network, thereby avoiding affecting a network connection behavior of the user of the terminal device.

In an embodiment of this application, after disconnecting the connection between the terminal device and the second network, the method further includes: prompting a user that the terminal device has automatically selected a hotspot of the second network for connection, and prompting the user that the terminal device may be connected to the second network by selecting the network hotspot information, recorded in the network list, of the second network. In the foregoing technical solution, the user may be prompted to connect the terminal device to the second network with a better network rate.

In an embodiment of this application, after disconnecting the connection between the terminal device and the second network, the method further includes: connecting the terminal device to the second network, when connected to the first network, if it is detected that a network rate of the terminal device decreases to a preset speed value. In the foregoing technical solution, when it is detected that the network rate of the terminal device decreases to the preset speed value when connected to the first network, the terminal device may be automatically connected to the second network with the higher network rate, thereby improving the network rate of the terminal device.

In an embodiment of this application, after disconnecting the connection between the terminal device and the second network, the method further includes: connecting the terminal device to the second network, when connected to the first network, if it is detected that a network signal quality of the terminal device decreases to a preset signal quality value. In the foregoing technical solution, when it is detected that the network signal quality of the terminal device decreases to the preset signal quality value when connected to the first network, the terminal device may be automatically connected to the second network with the better network quality, thereby improving the network rate of the terminal device.

In an embodiment of this application, the connecting the terminal device to the second network includes: acquiring a login password of the first network from a network list if it is determined that the terminal device is in a screen-off state; and sending the connection request to the network hotspot of the second network through the login password of the first network, and connecting to a network hotspot of the first network after verification of the connection request fails. In the foregoing technical solution, if authentication of the connection request sent to the network hotspot of the second network fails, the terminal device is connected to the network hotspot of the first network, so as to ensure that the terminal device can be normally connected to the network.

In an embodiment of this application, the acquiring network hotspot information of a second network includes: acquiring a network signal intensity of the second network, and acquiring the network hotspot information of the second network when the network signal intensity is less than a preset signal intensity value. In the foregoing technical solution, when the terminal device is connected to the second network, if the signal intensity of the second network is less than the preset signal intensity value, the terminal device acquires the network hotspot information of the first network, and sends the prompt message to prompt that the network hotspot of the first network exists for the user for connection when the acquired network hotspot information of the first network satisfies the preset condition, so that it is convenient for the user to manually switch the network connected to the terminal device to the first network with the higher network rate or better network signal quality, thereby improving the network rate and the network signal quality of the terminal device. The terminal device is automatically connected to the first network if it is detected that the terminal device is not connected to the first network within preset time after the prompt message is sent, so as to automatically switch the network of the terminal device to the first network, so that the terminal device is connected to the optimal network.

In an embodiment of this application, the sending a prompt message to prompt that the network hotspot of the second network exists includes: prompting that the network hotspot of the second network exists through notification information, wherein a notification message includes a link address of a network connection interface, and the network connection interface is a network connection interface of the second network.

According to a second aspect, an embodiment of this application provides a terminal device, including a processor and a memory, where the processor is connected to the memory, the memory is configured to store a program instruction; and the processor is configured to read the program instruction stored in the memory to implement the foregoing network connection control method.

According to a third aspect, an embodiment of this application provides a computer-readable storage medium. The computer-readable storage medium stores a program instruction, and the program instruction, when run on a terminal device, causes the terminal device to perform the foregoing network connection control method.

In addition, technical effects brought by the second aspect to the third aspect may refer to the description related to the designed methods in the foregoing method part, and details are not described herein again.

### BRIEF DESCRIPTION OF DRAWINGS

To describe the technical solutions of the embodiments of this application more clearly, the accompanying drawings in the embodiments will be briefly introduced below. It should be understood that the accompany drawings below only illustrate some embodiments of this application. Therefore, they should not be regarded as limitations to the scope. Persons of ordinary skill in the art may further obtain other related drawings according to these drawings without making creative efforts.
FIG. 1 is an application scenario diagram of a network connection control method provided in an embodiment of this application;
FIG. 2 is a flowchart of a network connection control method provided in an embodiment of this application;
FIG. 3 is a schematic diagram of notification information provided in an embodiment of this application;
FIG. 4 is a schematic diagram of a network connection interface provided in an embodiment of this application;
FIG. 5 is a flowchart of a network connection control method provided in another embodiment of this application;
FIG. 6 is a schematic diagram of a network setting interface provided in an embodiment of this application;
FIG. 7 is a flowchart of a network connection control method provided in another embodiment of this application; and
FIG. 8 is a schematic diagram of an electronic device in an embodiment of this application.

### DESCRIPTION OF EMBODIMENTS

Hereinafter, the terms "first" and "second" are for descriptive purposes only and are not to be construed as indicating or implying their relative importance or implicitly specifying the number of indicated technical features. Therefore, a feature limited by "first" or "second" may explicitly or implicitly include one or more of the features. In the description of the embodiments of this application, the terms such as "exemplary" or "for example" are used to represent giving an example, an illustration, or a description. Any embodiment or design solution described as "exemplary" or "for example" in embodiments of this application should not be explained as being more preferred or having more advantages than another embodiment or design solution. Exactly, use of the term, such as "exemplary" or "for example", is intended to present a related concept in a specific manner.

Unless otherwise defined, meanings of all technical and scientific terms used in this specification are the same as those usually understood by persons skilled in the art to which this application belongs. The terms used in the specification of this application are merely intended to describe objectives of the specific embodiments, but are not intended to limit this application. It is to be understood that in this application, unless otherwise specified, "/" represents "or". For example, A/B may represent A or B. In this application, "and/or" describes only an association relationship for describing associated objects and represents that three relationships may exist. For example, A and/or B may represent: A alone, both A and B, and B alone. "At least one" means one or more. "A plurality of" means two or more. For example, at least one of a, b, or c may represent seven conditions: a, b, c, a and b, a and c, b and c, and a, b, and c.

An existing terminal device may be connected to different Wi-Fi networks. For example, a home dual-frequency separated router may support a 2.4 GHz frequency band and a 5G frequency band. The 2.4 GHz frequency band provides a 2.4G network for a user to use, and the 5G frequency band is used for a 5G network connection. However, when using the terminal device, a user usually fixedly connects the terminal device at a frequency band, for example, fixedly connects the terminal device to the 2.4G network or the 5G network. However, performance of different Wi-Fi networks is different. For example, under a circumstance of normal work of the network, a network rate of the 2.4G network is less than a network rate of the 5G network, and the penetrating power and signal radiation capability of the 5G network are also inferior to those of the 2.4G network. If the terminal device is fixedly connected to the 2.4G network, a service of a high network rate of the 5G network cannot be acquired. If the terminal device is fixedly connected to the 5G network, when a signal of the 5G network is blocked, the penetrating power and radiation capability of the signal of the 5G network is weakened, resulting in a low network rate of the Wi-Fi network, and affecting the Internet surfing experience of the user. Therefore, if the terminal device is fixedly connected to a Wi-Fi network, the terminal device cannot be connected to the optimal network.

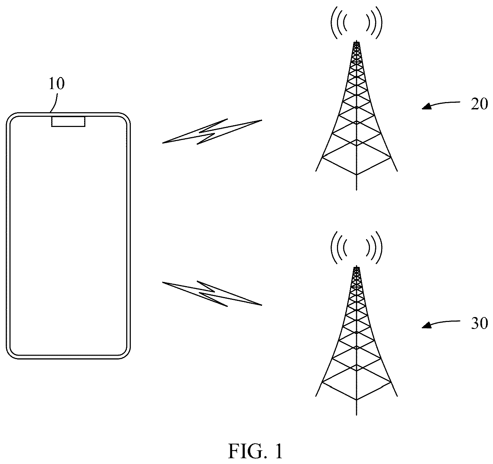

To resolve a technical problem that a terminal device is fixedly connected to a Wi-Fi network, resulting in that Wi-Fi network switching cannot be implemented when a network rate of the Wi-Fi network is low. An embodiment of this application provides a network connection control method. Referring to FIG. 1, it is an application scenario diagram of a network connection control method provided in an embodiment of this application. The terminal device 10 can be connected to a first network 20 and a second network 30. The network connection control method is configured to control the terminal device 10 to be connected to one of the first network 20 or the second network 30. For example, if the network rate of the second network 30 is higher than the network rate of the first network 20, the network connection control method provided in the embodiment of this application can control the terminal device 10 to be connected to the second network 30. If the location of the terminal device 10 changes, at the current location, the network rate of the first network 20 is higher than the network rate of the second network 30. The network connection control method provided in the embodiment of this application can control a network connected to the terminal device 10 to be switched from the second network 30 to the first network 20, thereby improving the network rate of the terminal device 10. In an embodiment of this application, the first network 20 and the second network 30 are Wi-Fi networks, for example, the first network 20 is a 2.4G network, and the second network 30 is a 5G network, or the first network 20 is a 5G network, and the second network 30 is a 2.4G network. This is not limited in the embodiment of this application. In an embodiment of this application, the network rate of the first network 20 being higher than the network rate of the second network 30 means that the network rate of the first network 20 in a normal working state is higher than the network rate of the second network 30 in a normal working state. For example, the network rate of the 5G network in the normal working state is higher than the network rate of the 2.4G network in the normal working state. In another embodiment of this application, the network rate of the first network 20 being higher than the network rate of the second network 30 means that the network rate of the first network 20 in a normal working state is higher than the network rate of the second network 30 subjected to severe network interference. For example, the network rate of the 2.4G network in the normal working state is higher than the network rate of the 5G network subjected to severe network interference. The normal working state refers to a state where the network is not subjected to network interference or a state where the degree of network interference is lower. In an embodiment of this application, the terminal device 10 may be a mobile phone, a tablet personal computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart household device, or a smart city device.

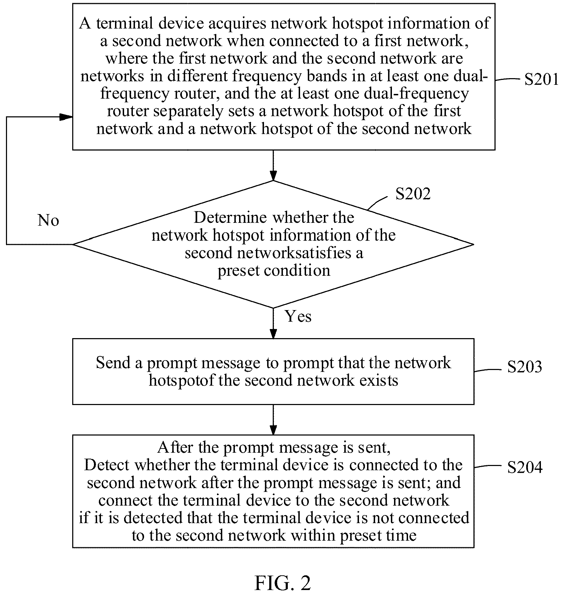

Referring to FIG. 2, it is a flowchart of a network connection control method provided in an embodiment of this application. The method disclosed in the embodiments of this application or the method shown in the flowchart includes one or more steps used to implement the method. Without departing from the scope of the claims, execution orders of the plurality of steps may be interchanged with each other, and some steps may also be deleted. Some embodiments will be described below in conjunction with the accompanying drawings. In the absence of conflict, the following embodiments and features in the embodiments can be combined with one another. The network connection control method includes the following steps.

Step S201: A terminal device acquires network hotspot information of a second network when connected to a first network, where the first network and the second network are networks in different frequency bands in at least one dual-frequency router, and the at least one dual-frequency router separately sets a network hotspot of the first network and a network hotspot of the second network.

To describe the examples more clearly, specific implementation content of the network connection control method is described below by using an example in which the terminal device 10 is a mobile phone, the first network 20 is a 2.4G network, and the second network 30 is a 5G network. The dual-frequency router separately sets a network hotspot of the 2.4G network and a network hotspot of the 5G network, so that the mobile phone is only connected to the network hotspot of the 2.4G network in a usage scenario. When connected to the 2.4G network, the mobile phone records network hotspot information of the 2.4G network in a network list where Wi-Fi has already been saved. In an embodiment, the network hotspot information of the 2.4G network may include at least a device identification number of a network device of the 2.4G network, an identification number of the network hotspot of the 2.4G network, and a network identification number of the 2.4G network. The network device may be a router. The router is configured to set the network hotspot. For example, a router of the 2.4G network is configured to set the network hotspot of the 2.4G network. The device identification number of the network device may be an organically unique identifier (Organizationally Unique Identifier, OUI) of the network device, is configured to represent an identifier of the network device, and may be used to uniquely identify a 32-bit identifier of a media access control (Media Access Control, MAC) address. The OUI may be configured to identify and distinguish different MAC addresses, and may implement functions such as route selection, security authentication, and fault location accordingly.

An identification number of the network hotspot is a broadcast service set identifier (Broadcast Service Set Identifier, BSSID), is an identifier in a Wi-Fi network, can identify a wireless access point (Access Point, AP), and may be used to represent a unique identifier of the network hotspot. The BSSID may be a 6-byte hexadecimal number, and for example, may usually start with a capital letter "G". In the Wi-Fi network, each terminal device (such as a computer or a smartphone) needs a unique BSSID to identify the terminal device. When connected to an AP, the terminal device may send a BSSID request to the AP, and acquire a BSSID matching the request. Once acquiring the BSSID, the terminal device may use the BSSID to communicate with another device.

The network identification number is a service set identifier (Service Set Identifier, SSID), and is configured to represent a name of a network, and distinguish between different service sets. In network communication, a service set refers to a group of related network services, and may share a same characteristic such as a protocol, a port, and a data format. The service set identifier allows the network device to identify and select a suitable service set according to a specific identifier, thereby implementing efficient data transmission and routing. The service set identifier is usually formed by a 32-bit binary digit, and may be represented as a hexadecimal number or a dotted decimal number. For example, a common service set identifier is the first 32 bits in an IPv4 address, or may be a unique 16-bit GUID value.

For example, the mobile phone may acquire an OUI of the network device of the 2.4G network, a BSSID of the network hotspot of the 2.4G network, and an SSID of the 2.4G network from the network list where Wi-F has already been saved. When connected to the 2.4G network, the mobile phone scans hotspots around and acquires broadcast information sent by a router of the 5G network. The mobile phone parses network hotspot information of the 5G network from the acquired broadcast information. The network hotspot information of the 5G network includes an OUI of the network device of the 5G network, a BSSID of the network hotspot of the 5G network, and an SSID of the 5G network.

Step S202: Whether the network hotspot information of the second network satisfies a preset condition is determined. In an embodiment of this application, if the network hotspot information of the second network satisfies the preset condition, step S203 is performed. If the network hotspot information of the second network does not satisfy the preset condition, the process returns to step S201, to continue to acquire network hotspot information of a next second network.

In an embodiment of this application, the terminal device may determine whether the network hotspot information of the second network satisfies the preset condition by comparing the OUI, BSSID, and/or SSID corresponding to the second network with the OUI, BSSID, and/or SSID corresponding to the first network. For example, the mobile phone acquires the device identification number OUI of the router, the BSSID of the network hotspot, and the network identification number SSID of the 2.4G network from the network list where Wi-Fi has already been saved.

In an embodiment of this application, it is determined that the network hotspot information of the 5G network satisfies the preset condition if the device identification number of the network device of the 5G network is the same as the device identification number of the network device of the 2.4G network, and the identification number of the network hotspot of the 5G network is the same as the identification number of the network hotspot of the 2.4G network. In this embodiment of this application, it may be determined that the 5G network and the 2.4G network are from a same network device (for example, a same router) if the device identification number of the network device of the 5G network is the same as a device identification number of the network device of the 2.4G network, and the identification number of the network hotspot of the 5G network is the same as the identification number of the network hotspot of the 2.4G network. In this way, it is convenient for the mobile phone to perform network switching between Wi-Fi networks of the same network device.

In another embodiment, it is determined that the network hotspot information of the 5G network satisfies the preset condition if the device identification number of the router of the 5G network is different from the device identification number of the network device of the 2.4G network, but the network identification number of the 5G network matches the 2.4G network identification number. In an embodiment of this application, the network identification number of the 5G network matching the network identification number of the 2.4G network may mean that partial fields of the network identification number of the 5G network and the network identification number of the 2.4G network are the same. For example, the network identification number of the 5G network is "WXW0101", and the network identification number of the 2.4G network is "WXW0001". Because the network identification number "WXW0101" is the same as the partial fields "WXW0" of the network identification number "WXW0001", it may be determined that the network hotspot information of the 5G network satisfies the preset condition. In the embodiment of this application, it indicates that the 5G network or the 2.4G network belongs to a network of a same user, and login passwords of the 5G network and the 2.4G network are usually set to be the same if the device identification number of the router of the 5G network is different from the device identification number of the network device of the 2.4G network, but the network identification number of the 5G network matches the identification number of the 2.4G network. In this way, it is convenient for a mobile phone to perform network switching between the 5G network and the 2.4G network.

Step S203: A prompt message is sent to prompt that the network hotspot of the second network exists.

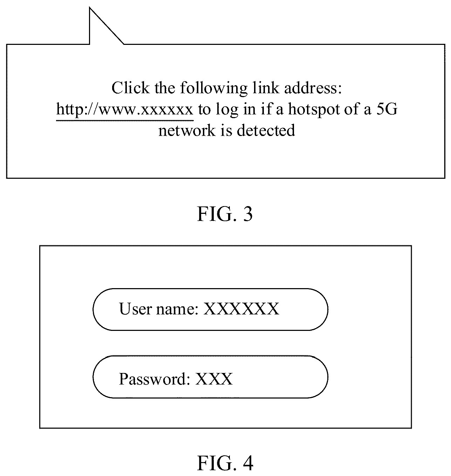

In an embodiment of this application, the terminal device may output a prompt message to notify the user that a connectable network hotspot of the second network exists. For example, the mobile phone prompts that the network hotspot of the 5G network exists through notification information. Referring to FIG. 3, it is a schematic diagram of notification information provided in an embodiment of this application. The notification information prompts that the network hotspot of the 5G network that can be connected to the mobile phone exists. Exemplarily, a notification message may include a link address of a network connection interface. The network connection interface may be a network connection interface of the 5G network. The network connection interface shown in FIG. 4 is displayed by clicking the link address. The network connection interface includes a user name and a login password. After the user inputs a correct user name and login password in the network connection interface, the connection between the mobile phone and the 5G network may be implemented. In an embodiment of this application, the mobile phone may display the notification message in a form of a pop-up window, or may display the notification message in a notification bar of the mobile phone.

Step S204: Whether the terminal device is connected to the second network is detected after the prompt message is sent; and the terminal device is connected to the second network if it is detected that the terminal device is not connected to the second network within preset time.

In an embodiment of this application, timing is performed after the mobile phone sends the prompt message. When the time of sending the prompt message reaches the preset time, if it is detected that the network hotspot information of the 5G network is not recorded in the network list where Wi-Fi has already been saved of the mobile phone, it is determined that the mobile phone is not connected to the 5G network within the preset time, and the mobile phone is connected to the network hotspot of the 5G network. The preset time may be set according to a user requirement. For example, the preset time may be set to several minutes (for example, 5 minutes). The preset time is not limited in actual application. It is to be noted that, in a process of connecting to the mobile phone is connected to the network hotspot of the 5G network, the mobile phone is disconnected from the 2.4G network.

In an embodiment of this application, a login password of the 2.4G network is acquired from the network list if it is detected that the mobile phone is in a screen-extinguished state. The mobile phone sends the connection request carrying the login password of the 2.4G network to the network hotspot of the 5G network. The router of the 5G network responds to the connection request and verifies the login password. After verification of the login password by the router in the 5G network succeeds, the mobile phone is connected to the network hotspot of the 5G network.

In an embodiment of this application, if verification of the login password by the router of the 5G network fails, the mobile phone sends the connection request carrying the login password of the 2.4G network to the network hotspot of the 2.4G network, so as to connect to the network hotspot of the 2.4G network. In an embodiment of this application, the network rate of the 5G network is higher than the network rate of the 2.4G network.

In an embodiment of this application, the mobile phone acquires the screen-off state by using an isScreenOn() function in a PoserManager category. If the isScreenOn() function returns a true value, it indicates that the mobile phone is currently in a screen-on state; and if the isScreenOn() function returns a false value, it indicates that the mobile phone is currently in a screen-off state.

In an embodiment of this application, the mobile phone may send the connection request carrying the login password of the 2.4G network to the network hotspot of the 5G network in a silent mode in the screen-off state. In this way, the network can be automatically connected or switched in a state that is not perceived by the user, without interference to the user. In addition, it can be ensured that the mobile phone is always connected to a high-rate network, and the network rate is ensured when the user uses the mobile phone to access the Internet, thereby improving the Internet surfing experience of the user.

In the embodiment of this application, when the terminal device is connected to the first network, if the acquired network hotspot information of the second network satisfies a preset condition, a prompt message is sent to prompt that a network hotspot of the second network exists for a user to connect to, so that it is convenient for the user to manually switch a network connected to the terminal device to the second network with a higher network rate or a better network signal quality. In this way, the network rate and the network signal quality of the terminal device are improved. In addition, the terminal device is automatically roamed and connected to the second network if it is detected that the terminal device is not connected to the second network within the preset time after the prompt message is sent, thereby automatically switching the network of the terminal device to the second network, so that the terminal device can be connected to the network with the highest rate.

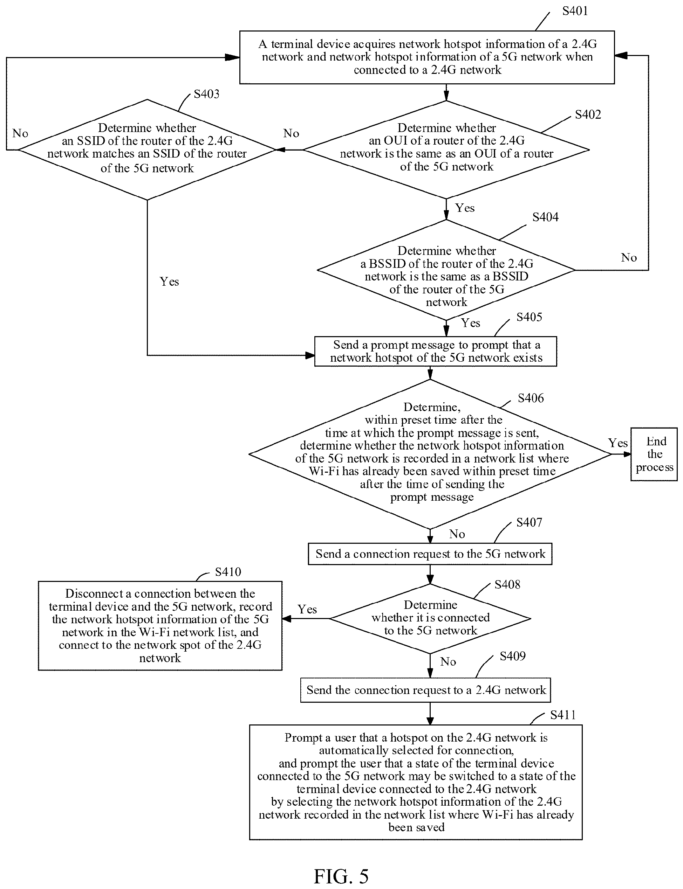

Referring to FIG. 5, it is a flowchart of a network connection control method provided in another embodiment of this application. The method includes the following steps.

Step S401: A terminal device acquires network hotspot information of a 2.4G network and network hotspot information of a 5G network when connected to the 2.4G network.

In an embodiment of this application, the 2.4G network and the 5G network are networks in different frequency bands in at least one dual-frequency router, and the at least one dual-frequency router separately sets a network hotspot of the 2.4G network and a network hotspot of the 5G network, so that the terminal device is only connected to the network hotspot of the 2.4G network in a usage scenario. Network hotspot information of the 5G network includes a device identification number OUI of a router of the 5G network, an identification number BSSID of a network hotspot of the 5G network, and a network identification number SSID of the 5G network. The network hotspot information of the 2.4G network includes an OUI of a router of the 2.4G network, a BSSID of a network hotspot of the 2.4G network, and an SSID of the 2.4G network.

The specific implementation content of step S401 refers to the specific implementation content of step S201 in FIG. 2, and details are not described herein again.

Step S402: Whether an OUI of a router of the 2.4G network is the same as an OUI of a router of the 5G network is determined. If the OUI of the router of the 2.4G network is different from the OUI of the router of the 5G network, step S403 is performed; otherwise, if the OUI of the router of the 2.4G network is the same as the OUI of the router of the 5G network, step S404 is performed.

Step S403: Whether an SSID of the router of the 2.4G network matches an SSID of the router of the 5G network is determined. If the SSID of the router of the 2.4G network matches the SSID of the router of the 5G network, step S405 is performed; otherwise, if the SSID of the router of the 2.4G network does not match the SSID of the router of the 5G network, the process returns to step S401, and compares the network hotspot information of the 2.4G network with network hotspot information of another 5G network again. In an embodiment of this application, the compared network hotspot information of the 5G network that does not match the network hotspot information of the 2.4G network may be recorded, and when the network hotspot information of the 2.4G network is compared with network hotspot information of another 5G network next time, the recorded network hotspot information of the 5G network is removed from the compared network hotspot information. In an embodiment of this application, whether the SSID of the router of the 2.4G network matches the SSID of the router of the 5G network may determine whether partial fields of the SSID of the router of the 2.4G network and the SSID of the router of the 5G network are the same.

Step S404: Whether a BSSID of the router of the 2.4G network is the same as a BSSID of the router of the 5G network is determined. If the BSSID of the router of the 2.4G network is the same as the BSSID of the router of the 5G network, step S405 is performed; otherwise, if the BSSID of the router of the 2.4G network is different from the BSSID of the router of the 5G network, the process returns to step S401, and compares the network hotspot information of the 2.4G network with network hotspot information of another 5G network again.

Step S405: A prompt message is sent to prompt that a network hotspot of the 5G network exists.

In an embodiment of this application, the prompt message may be "A 5G network with better network quality nearby may be connected, so as to provide network experience better".

The specific implementation content of step S405 may refer to the specific implementation content of step S203 in FIG. 2, and details are not described herein again.

Step S406: Whether the network hotspot information of the 5G network is recorded in a network list where Wi-Fi has already been saved is determined within preset time after the time of sending the prompt message. If the network hotspot information of the 5G network is recorded in the network list where Wi-Fi has already been saved, the process ends. Otherwise, if the network hotspot information of the 5G network is not recorded in the network list where Wi-Fi has already been saved, step S407 is performed. In the embodiment of this application, if network hotspot information of the 5G network is recorded in the network list where Wi-Fi has already been saved, it indicates that the mobile phone has a behavior event of switching from the 2.4G network to the 5G network. Therefore, when it is determined that the network hotspot information of the 5G network is recorded in the network list where Wi-Fi has already been saved, the current network connection behavior of the user is maintained, and no connection is sent to the 5G network, thereby avoiding interference to the user.

Step S407: A connection request is sent to the 5G network.

In an embodiment of this application, a login password of the 2.4G network is acquired, if it is detected that the terminal device is in a screen-off state, and the connection request carrying the login password of the 2.4G network is sent to the network hotspot of the 5G network.

Step S408: Whether it is connected to the 5G network is determined. If it is not connected to the 5G network, step S409 is performed; and if it is connected to the 5G network, step S410 is performed.

Step S409: The connection request is sent to a network hotspot of the 2.4G network, so as to connect to the network hotspot of the 2.4G network.

In an embodiment of this application, the terminal device sends the connection request carrying the login password of the 2.4G network to the network hotspot of the 2.4G network, so as to connect to the network hotspot of the 2.4G network. After the connection to the network hotspot of the 2.4G network, the terminal device does not prompt a connection result to the user.

Step S410: A connection between the terminal device and the 5G network is disconnected, the network hotspot information of the 5G network is recorded in the network list where Wi-Fi has already been saved, and the network hotspot of the 2.4G network is connected.

In an embodiment of this application, after the connection between the terminal device and the 5G network is disconnected, the terminal device is reconnected to the network hotspot of the 2.4G network, to avoid affecting the network connection behavior of the user of the terminal device. Specifically, the terminal device sends the connection request carrying the login password of the 2.4G network to the network hotspot of the 2.4G network, and is connected to the network hotspot of the 2.4G network after verification of the login password succeeds.

Step S411: A user is prompted that a hotspot of the 5G network is automatically selected for connection, and the user is prompted that a state of the terminal device connected to the 2.4G network may be switched to a state of the terminal device connected to the 5G network by selecting the network hotspot information of the 5G network recorded in the network list where Wi-Fi has already been saved.

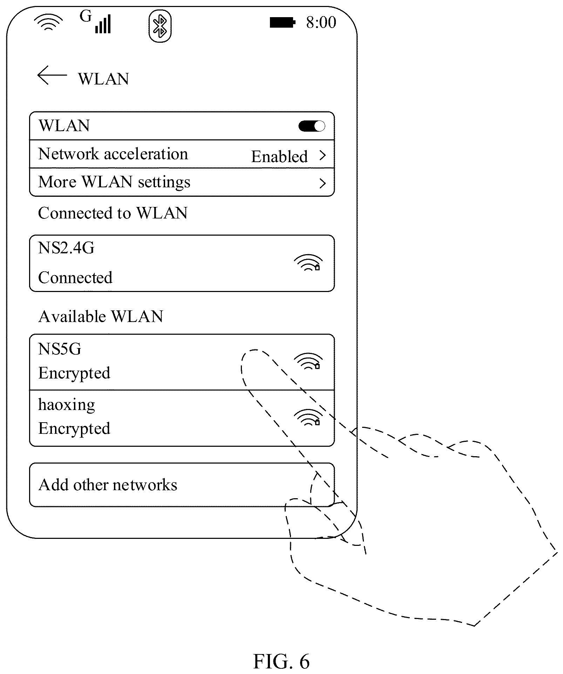

In an embodiment of this application, a prompt system of the terminal device prompts the user that a hotspot of the 5G network is automatically selected for connection, and prompt the user that the state of the terminal device connected to the 2.4G network may be switched to the state of the terminal device connected to the 5G network by selecting the network hotspot information of the 5G network recorded in the network list where Wi-Fi has already been saved. Referring to FIG. 6, it is a schematic diagram of a network setting interface provided in an embodiment of this application. The network setting interface includes a network list where Wi-Fi has already been saved. The network list where Wi-Fi has already been saved includes the SSID of the 5G network and the SSID of the 2.4G network. The user switches the state of the terminal device connected to the 2.4G network to the state of the terminal device connected to the 5G network by selecting the SSID of the 5G network in the network setting interface.

In an embodiment of this application, after step S410, the method further includes the following: The terminal device is connected to the network hotspot of the 5G network, when the terminal device is connected to the 2.4G network, if it is detected that the network rate of the terminal device decreases to a preset speed value.

In an embodiment of this application, after step S410, the method further includes the following: The terminal device is connected to the network hotspot of the 5G network, when connected to the 2.4G network, if it is detected that the network signal quality of the terminal device decreases to the preset signal quality value. In an embodiment of this application, the network signal quality may be represented by the network signal intensity. Higher network signal intensity indicates better network signal quality. In an embodiment of this application, the preset speed value and the preset signal quality value may be preset in the terminal device. During booting, the terminal device may be automatically loaded with the preset speed value and the preset signal quality value. The preset speed value and the preset signal quality value may be set or modified as needed. This is not limited in the embodiment of this application.

In the embodiment of this application, when connected to the 2.4G network, if the acquired network hotspot information of the 5G network satisfies a preset condition, the terminal device sends a prompt message to prompt that the network hotspot of the 5G network exists for a user to connect to, so that it is convenient for the user to manually switch the network connected to the terminal device to the 5G network with the higher network rate or better network signal quality, thereby improving the network rate and the network signal quality of the terminal device. In addition, the terminal device may be automatically connected to the 5G network if it is detected that the terminal device is not connected to the 5G network in the preset time, to automatically switch the network of the terminal device to the 5G network, so that the terminal device can be connected to the optimal network in a state that is not perceived by the user.

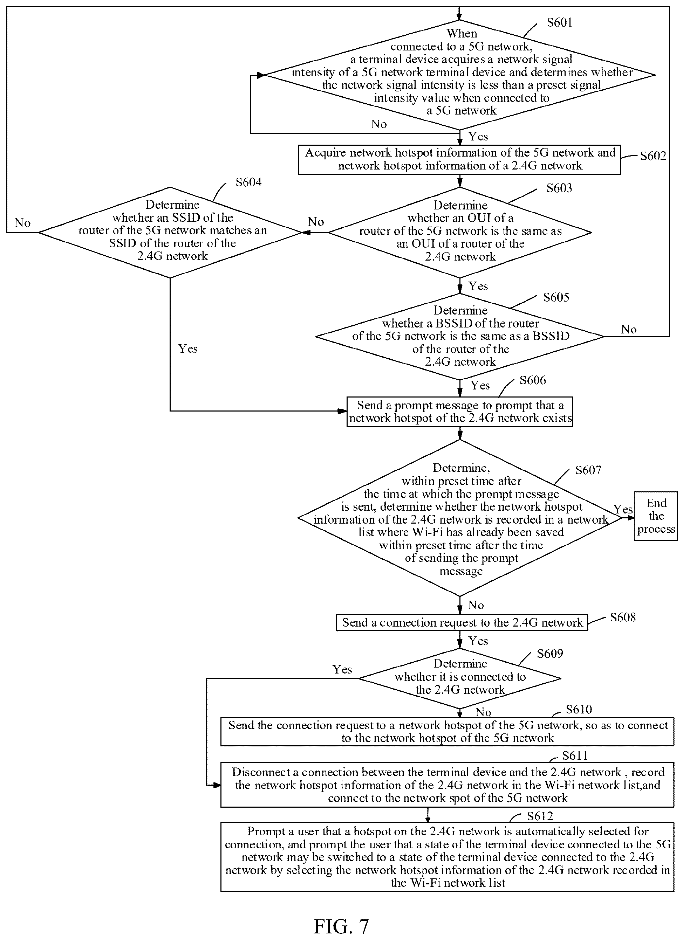

Referring to FIG. 7, it is a flowchart of a network connection control method provided in another embodiment of this application. The method includes the following steps.

Step S601: A terminal device acquires a network signal intensity of a 5G network terminal device and determines whether the network signal intensity is less than a preset signal intensity value when connected to the 5G network.

In an embodiment of this application, the 2.4G network and the 5G network are networks in different frequency bands in at least one dual-frequency router, and the at least one dual-frequency router separately sets a network hotspot of the 2.4G network and a network hotspot of the 5G network, so that the terminal device is only connected to the network hotspot of the 5G network in a usage scenario. In an embodiment of this application, if it is detected that the network signal intensity of the terminal device is less than the preset signal intensity value, step S602 is performed. If it is detected that the network signal intensity of the terminal device is greater than or equal to the preset signal strength value, step S601 may be repeated until it is detected that the network signal intensity of the terminal device is less than the preset signal intensity value. In an embodiment of this application, the preset signal intensity value is -75 dbm.

Step S602: Network hotspot information of the 5G network and network hotspot information of a 2.4G network is acquired.

When connected to the 5G network, the terminal device records network hotspot information of the 5G network in a network list where Wi-Fi has already been saved. The network hotspot information of the 5G network includes an OUI of the network device of the 5G network, a BSSID of the network hotspot of the 5G network, and an SSID of the 5G network. The terminal device may acquire the OUI of the network device of the 5G network, the BSSID of the network hotspot of the 5G network, and the SSID of the 5G network from a network list where Wi-Fi has already been saved.

When connected to the 5G network, the terminal device scans hotspots around and acquires broadcast information sent by the router of the 2.4G network. The terminal device parses the network hotspot information of the 2.4G network from the acquired broadcast information. The network hotspot information of the 5G network includes an OUI of the network device of the 2.4G network, a BSSID of the network hotspot of the 2.4G network, and an SSID of the 2.4G network.

Step S603: Whether an OUI of a router of the 5G network is the same as an OUI of a router of the 2.4G network is determined. If the OUI of the router of the 5G network is different from the OUI of the router of the 2.4G network, step S604 is performed, and if the OUI of the router of the 5G network is the same as the OUI of the router of the 2.4G network, step S605 is performed.

Step S604: Whether an SSID of the router of the 5G network matches an SSID of the router of the 2.4G network is determined. If the SSID of the router of the 5G network matches the SSID of the router of the 2.4G network, step S606 is performed; and if the SSID of the router in the 5G network does not match the SSID of the router in the 2.4G network, the process returns to step S601.

In an embodiment of this application, whether the SSID of the router of the 5G network matches the SSID of the router of the 2.4G network may be determined by determining whether partial fields of the SSID of the router of the 5G network and the SSID of the router of the 2.4G network are the same.

Step S605: Whether a BSSID of the router of the 5G network is the same as a BSSID of the router of the 2.4G network is determined, for example, whether first eight bits of the BSSID of the router of the 5G network are the same as first eight bits of the BSSID of the router of the 2.4G network is determined. If the BSSID of the router of the 5G network is the same as the BSSID of the router of the 2.4G network, step S606 is performed; and if the BSSID of the router of the 5G network is different from the BSSID of the router of the 2.4G network, the process returns to step S601.

Step S606: A prompt message is sent to prompt that a network hotspot of the 2.4G network exists.

Step S607: Whether the network hotspot information of the 2.4G network is recorded in a network list where Wi-Fi has already been saved is determined within preset time after the time of sending the prompt message. If the network hotspot information of the 2.4G network is recorded in the network list where Wi-Fi has already been saved, the process ends. Otherwise, if the network hotspot information of the 2.4G network is not recorded in the network list where Wi-Fi has already been saved, step S608 is performed. In this embodiment of this application, if network hotspot information of the 2.4G network is recorded in the network list where Wi-Fi has already been saved, it indicates that the mobile phone has a behavior event of switching from the 5G network to the 2.4G network. Therefore, when it is determined that the network hotspot information of the 2.4G network is recorded in the network list where Wi-Fi has already been saved, the current network connection behavior of the user is maintained, and no connection is sent to the 2.4G network, thereby avoiding interference to the user.

Step S608: A connection request is sent to the 2.4G network.

In an embodiment of this application, a login password of the 5G network is acquired, if it is detected that the terminal device is in a screen-off state, and the connection request carrying the login password of the 5G network is sent to the network hotspot of the 2.4G network.

Step S609: Whether it is connected to the 2.4G network is determined. If it is not connected to the 2.4G network, step S610 is performed; and if it is connected to the 2.4G network, step S611 is performed.

Step S610: The connection request is sent to a network hotspot of the 5G network, so as to connect to the network hotspot of the 5G network.

In an embodiment of this application, the terminal device sends the connection request carrying the login password of the 5G network to the network hotspot of the 5G network, so as to connect to the network hotspot of the 5G network. After the connection to the network hotspot of the 5G network, the terminal device does not prompt a connection result to the user.

Step S611: A connection between the terminal device and the 2.4G network is disconnected, the network hotspot information of the 2.4G network is recorded in the network list where Wi-Fi has already been saved, and the network hotspot of the 5G network is connected.

In an embodiment of this application, after the connection between the terminal device and the 2.4G network is disconnected, the terminal device is reconnected to the network hotspot of the 5G network, to avoid affecting the user behavior of the terminal device. Specifically, the terminal device sends the connection request carrying the login password of the 5G network to the network hotspot of the 5G network, and is connected to the network hotspot of the 5G network after verification of the login password succeeds.

Step S612: A user is prompted that a hotspot on the 2.4G network is automatically selected for connection, and the user is prompted that a state of the terminal device connected to the 5G network may be switched to a state of the terminal device connected to the 2.4G network by selecting the network hotspot information of the 2.4G network recorded in the network list where Wi-Fi has already been saved.

In an embodiment of this application, a prompt system application of the terminal device, an application prompts the user that a hotspot of the 2.4G network is automatically selected for connection, and prompts the user that the state of the terminal device connected to the 5G network may be switched to the state of the terminal device connected to the 2.4G network by selecting the network hotspot information of the 2.4G network recorded in the network list where Wi-Fi has already been saved.

In an embodiment of this application, after step S611, the method further includes the following: The terminal device is connected to the network hotspot of the 2.4G network, when the terminal device is connected to the 5G network, if it is detected that the network rate of the terminal device decreases to a preset speed value.

In an embodiment of this application, after step S611, the method further includes the following: The terminal device is connected to the network hotspot of the 2.4G network, when the terminal device is connected to the 5G network, if it is detected that the network signal quality of the terminal device decreases to a preset signal quality value. In an embodiment of this application, the preset speed value and the preset signal quality value are preset in the terminal device. During booting, the terminal device is loaded with the preset speed value and the preset signal quality value. The preset speed value and the preset signal quality value may be set as needed. This is not limited in the embodiment of this application.

In the embodiment of this application, when the terminal device is connected to the 5G network, if the network strength of the 5G network is less than the preset signal intensity value, the network hotspot information of the 2.4G network is acquired, and when the acquired network hotspot information of the 2.4G network satisfies the preset condition, the prompt message is sent to prompt that the network hotspot of the 2.4G network exists for the user to connect to, so that it is convenient for the user to manually switch the network connected to the terminal device to the 2.4G network with the higher network rate or better network signal quality, thereby improving the network rate and the network signal quality of the terminal device. In addition, the terminal device is automatically connected to the 2.4G network if it is detected that the terminal device is not connected to the 2.4G network within the preset time, so as to automatically switch the network of the terminal device to the 2.4G network, so that the terminal device is connected to the optimal network.

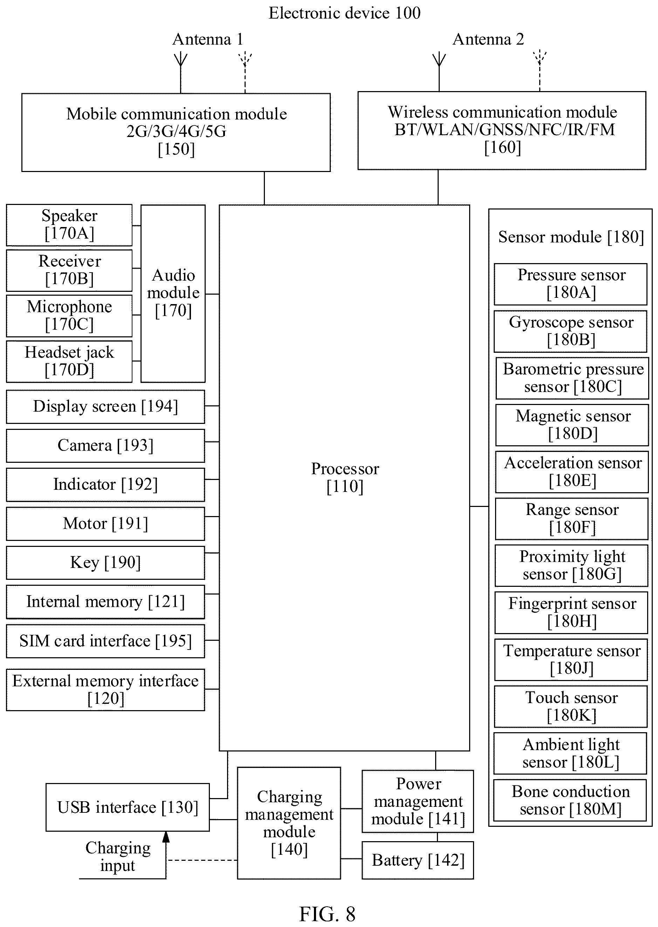

The electronic device 100 involved in the embodiment of this application will be introduced below. Referring to FIG. 8, it is a schematic diagram of an electronic device 100 in an embodiment of this application. The terminal device 100 may be the terminal device 10 in FIG. 1.

In the embodiment, the electronic device 100 may include a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a range sensor 180F, a proximity light sensor 180G, a fingerprint sensor 180H, a temperature sensor 180J, a touch sensor 180K, an ambient light sensor 180L, a bone conduction sensor 180M, and the like.

It may be understood that an example structure in this embodiment of this application does not constitute a specific limitation on the electronic device 100. In some other embodiments of this application, the electronic device 100 may include more or fewer components than those shown in the figure, or some merged components, or some split components, or different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural-network processing unit, NPU), and the like. Different processing units may be independent devices, or may be integrated into one or more processors.

The controller may generate an operation control signal based on instruction operation code and a time-sequence signal, and complete control of obtaining and executing of instructions.

A memory may be further disposed in the processor 110, to store instructions and data. In some embodiments, the memory in the processor 110 is a cache memory. The memory may store instructions or data that is recently used or cyclically used by the processor 110. If the processor 110 needs to use the instructions or data again, the processor may directly call the instructions or the data from the memory. Repeated access is avoided, and waiting time of the processor 110 is reduced, thereby improving the system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a bidirectional synchronization serial bus, and includes a serial data line (serial data line, SDA) and a serial clock line (derail clock line, SCL). In some embodiments, the processor 110 may include a plurality of groups of I2C buses. The processor 110 may be respectively coupled to a touch sensor 180K, a charger, a flash, a camera 193, and the like through different I2C bus interfaces. For example: the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of I2S buses. The processor 110 may be coupled to the audio module 170 through the I2S bus to implement communication between the processor 110 and the audio module 170. In some embodiments, the audio module 170 may transmit an audio signal to the wireless communication module 160 through the I2S interface, to implement a function of answering a call through a Bluetooth headset.

A PCM interface may also be used for audio communication, and samples, quantizes, and encodes an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

An UART interface is a universal serial data bus used for asynchronous communication. The bus may be a two-way communication bus. The bus converts to-be-transmitted data between serial communication and parallel communication. In some embodiments, the UART interface is usually configured to connect the processor 110 and the wireless communications module 160. For example: the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of music playback through a Bluetooth headset.

An MIPI interface may be configured to connect the processor 110 to a peripheral device such as a display screen 194 and a camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display screen 194 through the DSI interface, to implement a display function of the electronic device 100.

A GPIO interface may be configured through software. The GPIO interface may be configured as a control signal or as a data signal. In some embodiments, the GPIO interface may be configured to connect the processor 110 to the camera 193, the display screen 194, the wireless communication module 160, the audio module 170, the sensor module 180, and the like. The GPIO interface may also be configured as an I2C interface, an I2S interface, an UART interface, an MIPI interface, or the like.

The USB interface 130 is an interface compliant with a USB standard specification, and may be specifically a Mini USB interface, a Micro USB interface, a USB Type C interface, or the like. The USB interface 130 may be configured to be connected to a charger to charge the electronic device 100, or may be used for data transmission between the electronic device 100 and the peripheral device. The USB interface may also be configured to connect to a headset to play audio through the headset. The interface may also be configured to be connected to another electronic device 100, such as an AR device.

It may be understood that a schematic interface connection relationship between the modules in embodiments of this application is merely an example for description, and constitutes no limitation on the structure of the electronic device 100. In some other embodiments of this application, the electronic device 100 may also use an interface connection manner different from that in the foregoing embodiment, or use a combination of a plurality of interface connection manners.

The charging management module 140 is configured to receive a charging input from the charger. The charger may be a wireless charger, or may be a wired charger. In some embodiments of wired charging, the charging management module 140 may receive charging input from the wired charger through the USB interface 130. In some embodiments of wireless charging, the charging management module 140 may receive wireless charging inputted through a wireless charging coil of the electronic device 100. When charging the battery 142, the charging management module 140 may further supply power to the electronic device 100 through the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, the display screen 194, the camera 193, the wireless communication module 160, and the like. The power management module 141 may further be configured to monitor parameters such as a battery capacity, a quantity of battery cycles, and a battery health state (power leakage and impedance). In some other embodiments, the power management module 141 may also be disposed in the processor 110. In some other embodiments, the power management module 141 and the charging management module 140 may also be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 100 may be configured to cover one or more communication bands. Different antennas may be further multiplexed to increase a utilization rate of the antennas. For example: the antenna 1 may be multiplexed as a diversity antenna of a wireless local area network. In some other embodiments, the antenna may be used in combination with a tuning switch.

The mobile communication module 150 may provide a solution to wireless communication including 2G/3G/4G/5G and the like applied to the electronic device 100. The mobile communication module 150 may include at least one filter, switch, power amplifier, low noise amplifier (low noise amplifier, LNA), and the like. The mobile communication module 150 may receive an electromagnetic wave through the antenna 1, perform processing such as filtering and amplification on the received electromagnetic wave, and transmit the processed electromagnetic wave to the modem processor for demodulation. The mobile communication module 150 may further amplify a signal obtained after modulation by the modem processor, and the amplified signal is converted into an electromagnetic wave via the antenna 1 for radiation. In some embodiments, at least some function modules of the mobile communication module 150 may be disposed in the processor 110. In some embodiments, at least some of the functional modules of the mobile communication module 150 may be disposed in a same device as at least some of the modules of the processor 110.

The modem processor may include a modulator and a demodulator. The modulator is configured to modulate a to-be-sent low-frequency baseband signal into a medium or high-frequency signal. The demodulator is configured to demodulate the received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to an application processor. The application processor outputs a sound signal through an audio device (not limited to a speaker 170A, a phone receiver 170B, and the like), or displays an image or a video through the display screen 194. In some embodiments, the modem processor may be an independent device. In some other embodiments, the modem processor may be independent of the processor 110 and may be disposed in a same device as the mobile communication module 150 or another functional module.

The wireless communication module 160 may provide a wireless communication solution that is applied to the terminal device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices into that integrate at least one communication processing module. The wireless communications module 160 receives an electromagnetic wave through the antenna 2, performs frequency modulation and filtering on the electromagnetic wave signal, and sends the processed signal to the processor 110. The wireless communication module 160 may further receive a to-be-transmitted signal from the processor 110, perform frequency modulation and amplification on the to-be-transmitted signal, and convert an amplified signal into an electromagnetic wave for radiation via the antenna 2.

In some embodiments, in the electronic device 100, the antenna 1 is coupled to the mobile communication module 150, and the antenna 2 is coupled to the wireless communication module 160, so that the electronic device 100 may communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a Beidou navigation satellite system (Beidou navigation satellite system, BDS), a quasi-zenith satellite system (quasi-zenith satellite system, QZSS), and/or a satellite based augmentation system (satellite based augmentation systems, SBAS).

The electronic device 100 implements a display function through the GPU, the display 194, the application processor, and the like. The GPU is a microprocessor for image processing and is connected to the display 194 and the application processor. The GPU is configured to perform mathematical and geometric calculations, and is configured to perform graphics rendering. The processor 110 may include one or more GPUs that execute program instructions to generate or change display information.

The display screen 194 is configured to display an image, a video, or the like. The display screen 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Mini LED, a MicroLED, a Micro-OLED, a quantum dot light emitting diode (quantum dot light emitting diode, QLED), and the like. In some embodiments, the electronic device 100 may include one or N displays 194, where N is a positive integer greater than one.

The electronic device 100 may implement a photographing function through the ISP, the camera 193, the video codec, the GPU, the display screen 194, the application processor, and the like.

The ISP is configured to process data fed back by the camera 193. For example, during photographing, a shutter is enabled. Light is transmitted to a photosensitive element of the camera through a lens, and an optical signal is converted into an electrical signal. The photosensitive element of the camera transmits the electrical signal to the ISP for processing, and the electrical signal is converted into an image visible to a naked eye. The ISP may further perform algorithm optimization on a noise point, brightness, and a skin tone of the image. The ISP may further optimize parameters such as exposure and a color temperature of a to-be-photographed scene. In some embodiments, the ISP may be disposed in the camera 193.

The camera 193 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, so that the ISP converts the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than one.

The digital signal processor is configured to process a digital signal. In addition to a digital image signal, the digital signal processor may further process another digital signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG 2, MPEG 3, and MPEG 4.

The NPU is a neural network (neural-network, NN) computing processor to quickly process input information by learning from a structure of a biological neural network, for example, a mode of transmission between neurons in a human brain, and to further continuously perform self-learning. Applications such as intelligent cognition of the electronic device 100 may be implemented through the NPU, for example: image recognition, face recognition, voice recognition, and text understanding.

The internal memory 121 may include one or more random access memories (random access memory, RAM), and one or more non-volatile memories (non-volatile memory, NVM).

The random access memory may include a static random-access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth-generation DDR SDRAM is generally referred to as a DDR5 SDRAM), or the like. The non-volatile memory may include a disk storage device and a flash memory (flash memory).

According to an operating principle, the flash memory may be classified into NOR FLASH, NAND FLASH, 3D NAND FLASH, and the like; according to potential orders of storage cells, the flash memory may be classified into a single-level storage cell (single-level cell, SLC), a multi-level cell (multi-level cell, MLC), a triple-level cell (triple-level cell, TLC), a quad-level cell (quad-level cell, QLC), and the like; and according to a storage specification, the flash memory may be classified into a universal flash storage (English: universal flash storage, UFS), an embedded multi media storage card (embedded multi media storage card, eMMC), and the like.

The random access memory may be directly read and written by the processor 110, may be configured to store executable programs (for example, machine instructions) of an operating system or other running programs, or may be configured to store data of users and applications.

The non-volatile memory may also store executable programs, data of users and applications, and the like, and may be loaded into the random access memory in advance for the processor 110 to perform direct reading and writing.

The external memory interface 120 may be configured to connect to an external non-volatile memory, to expand a storage capability of the electronic device 100. The external non-volatile memory communicates with the processor 110 through the external memory interface 120, to implement a data storage function. For example, a file such as music or a video is stored in the external non-volatile memory.

The internal memory 121 or the external memory interface 120 is configured to store one or more computer programs. One or more computer programs are configured to be executed by the processor 110. The one or more computer programs include multiple instructions. When the multiple instructions are executed by the processor 110, the network connection control method performed on the electronic device 100 in the foregoing embodiments may be implemented, so as to implement a network connection control function of the electronic device 100.

The electronic device 100 may implement an audio function through the audio module 170, the speaker 170A, the receiver 170B, the microphone 170C, the headset jack 170D, the application processor, and the like. For example, music playback, recording, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "horn", is configured to convert an electrical audio signal into a sound signal. Music may be listened to or a hands-free call may be answered through the speaker 170A in the electronic device 100.

The phone receiver 170B, also referred to as an "earpiece", is configured to convert an audio electrical signal into a sound signal. When the electronic device 100 is configured to answer a call or receive voice information, the receiver 170B may be put close to a human ear to receive a voice.

The microphone 170C, also referred to as a "mic" and a "mike", is configured to convert the sound signal into an electrical signal. When making a call or sending voice information, a user may make a sound approaching the microphone 170C through the mouth of the user, to input a sound signal into the microphone 170C. At least one microphone 170C may be disposed in the electronic device 100. In some other embodiments, two microphones 170C may be disposed in the electronic device 100, to not only collect a sound signal, but also implement a noise reduction function. In some other embodiments, three, four, or more microphones 170C may also be disposed in the electronic device 100, to collect a sound signal, implement noise reduction, recognize a sound source, implement a directional recording function, and the like.

The headset jack 170D is configured to be connected to a wired headset. The headset jack 170D may be a USB interface 130, or may be a 3.5 mm open mobile terminal platform (open mobile electronic device 100 platform, OMTP) standard interface, or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed in the display screen 194. There are many types of pressure sensors 180A, such as a resistive pressure sensor, an inductive pressure sensor, and a capacitive pressure sensor. The capacitive pressure sensor may include at least two parallel plates made of a conductive material. When a force is applied to the pressure sensor 180A, a capacitance between electrodes changes. The electronic device 100 determines strength of the pressure based on the change of the capacitance. When a touch operation is performed on the display screen 194, the electronic device 100 detects strength of the touch operation according to the pressure sensor 180A. The electronic device 100 may further calculate a touch position based on a detection signal of the pressure sensor 180A. In some embodiments, touch operations that are performed at a same touch position but have different strength of the touch operations may correspond to different operation instructions. For example: when a touch operation with a touch operation intensity less than a first pressure threshold is performed on a short message application icon, an instruction for checking a short message is executed. When a touch operation with a touch operation strength greater than or equal to the first pressure threshold is performed on the short message application icon, an instruction of creating a new short message is executed.

The gyro sensor 180B may be configured to determine a motion pose of the electronic device 100. In some embodiments, angular velocities of the electronic device 100 around three axes (i.e., x, y, and z axes) may be determined by the gyro sensor 180B. The gyro sensor 180B may be used for image stabilization during shooting. For example, when the shutter is pressed, the gyroscope sensor 180B detects an angle of jitter of the electronic device 100, and calculates a distance to be compensated by a lens module needs to compensate based on the angle, and allows the lens to cancel the jitter of the electronic device 100 through reverse motion, thereby implementing image stabilization. The gyroscope sensor 180B may also be used in navigation and motion sensing game scenes.

The barometric pressure sensor 180C is configured to measure barometric pressure. In some embodiments, the electronic device 100 calculates an altitude through an air pressure value measured by the air pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a clamshell phone, the electronic device 100 may detect opening and closing of a flip cover according to the magnetic sensor 180D. Features such as automatic unlocking of the flip cover are further set according to the detected opening and closing state of the holster or opening and closing state of the flip cover.

The acceleration sensor 180E may detect an acceleration magnitude of the electronic device 100 in each direction (generally three axes). When the electronic device 100 is stationary, a magnitude and a direction of gravity may be detected. The acceleration sensor may be further configured to recognize a posture of the electronic device 100, and is applied to applications such as switchover between landscape and portrait modes and a pedometer.

The distance sensor 180F is configured to measure a distance. The electronic device 100 may measure the distance by using infrared or lasers. In some embodiments, in a photographing scene, the electronic device 100 may use the distance sensor 180F to measure a distance to implement fast focusing.

The optical proximity sensor 180G may include, for example, a light-emitting diode (LED) and a light detector such as a photodiode. The light-emitting diode may be an infrared light-emitting diode. The electronic device 100 may emit infrared light through the light-emitting diode. The electronic device 100 detects infrared reflected light from a nearby object by using the photodiode. When sufficient reflected light is detected, the electronic device may determine that there is an object near the electronic device 100. When detecting insufficient reflected light, the electronic device 100 may determine that there is no object near the electronic device 100. The electronic device 100 may detect, by using the optical proximity sensor 180G, that a user holds the electronic device 100 close to an ear for a call, so that automatic screen-off is implemented to achieve power saving. The optical proximity sensor 180G may be further configured to automatically unlock and lock the screen in a leather cover mode and a pocket mode.

The ambient light sensor 180L is configured to sense ambient light brightness. The electronic device 100 may adaptively adjust brightness of the display screen 194 based on the perceived brightness of the ambient light. The ambient light sensor 180L may be further configured to automatically adjust white balance during photographing. The ambient light sensor 180L may further cooperate with the optical proximity sensor 180G to detect whether the electronic device 100 is in a pocket, to prevent an accidental touch.

The fingerprint sensor 180H is configured to collect a fingerprint. The electronic device 100 may implement functions such as unlocking, accessing an application lock, photographing, and answering a call by using a collected fingerprint feature.

A temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor located near the temperature sensor 180J, to reduce power consumption and implement thermal protection. In some other embodiments, when the temperature is lower than another threshold, the electronic device 100 heats the battery 142, to avoid an abnormal shutdown of the electronic device 100 caused by a low temperature. In some other embodiments, when the temperature is lower than still another threshold, the electronic device 100 boosts an output voltage of the battery 142 to prevent abnormal shutdown caused by a low temperature.

The touch sensor 180K is also referred to as a "touch device". The touch sensor 180K may be disposed on the display 194, and the touch sensor 180K and the display 194 form a touchscreen. The touchscreen is also referred to as a "touch screen". The touch sensor 180K is configured to detect a touch operation on or near the touch sensor. The touch sensor may transmit the detected touch operation to the application processor, to determine a touch event type. A visual output related to a touch operation may be provided through the display screen 194. In some other embodiments, the touch sensor 180K may also be disposed on a surface of the electronic device 100 at a position different from that of the display 194.

The bone conduction sensor 180M may acquire a vibration signal. In some embodiments, the bone conduction sensor 180M may acquire a vibration signal of a vibration bone of a human vocal-cord part. The bone conduction sensor 180M may also contact a body pulse to receive a blood pressure beating signal. In some embodiments, the bone conduction sensor 180M may also be disposed in the headset, to combine into a bone conduction headset. The audio module 170 may parse out a voice signal based on the vibration signal of the vibration bone of the vocal-cord part that is acquired by the bone conduction sensor 180M, to implement a voice function. The application processor may parse heart rate information based on the blood pressure pulse signal obtained by the bone conduction sensor 180M, to implement a heart rate detection function.

The key 190 includes a power-on key, a volume key, and the like. The key 190 may be a mechanical key, or may be a touch key. The electronic device 100 may receive a key input, and generate a key signal input related to user setting and functional control of the electronic device 100.

The motor 191 may generate a vibration prompt. The motor 191 may be used for an incoming call vibration prompt or for a touch vibration feedback. For example, touch operations applied to different applications (for example, photographing, audio playback, or the like) may correspond to different vibration feedback effects. For touch operations performed in different regions of the display screen 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status or a power change, and may also be configured to indicate a message, a missed call, a notification, and the like.

The SIM card interface 195 is configured to connect to an SIM card. The SIM card may be inserted into the SIM card interface 195 or plugged from the SIM card interface 195, to come into contact with or be separated from the electronic device 100. The electronic device 100 may support one or N SIM card interfaces, where N is a positive integer greater than one. The SIM card interface 195 may support a Nano SIM card, a Micro SIM card, an SIM card, or the like. A plurality of cards may be inserted into the same SIM card interface 195 together. The plurality of cards may be of the same type or different types. The SIM card interface 195 may further be compatible with different types of SIM cards. The SIM card interface 195 may also be compatible with an external storage card. The electronic device 100 interacts with a network through the SIM card, to implement functions such as a call and data communication. In some embodiments, the electronic device 100 uses an eSIM, that is, an embedded SIM card. The eSIM card may be embedded into the electronic device 100 and cannot be separated from the electronic device 100.

The embodiment further provides a computer storage medium. The computer storage medium stores computer instructions. When the computer instructions run on an electronic device 100, the electronic device 100 is enabled to perform the foregoing related method steps to implement the network connection control method in the foregoing embodiments.

The embodiment further provides a computer program product. When the computer program product runs on a computer, the computer is enabled to perform the foregoing related steps to implement the network connection control method in the foregoing embodiments.

In addition, an embodiment of this application further provides an apparatus. The apparatus may be specifically a chip, a component, or a module. The apparatus may include a processor and a memory that are connected. The memory is configured to store computer executable instructions. When the apparatus runs, the processor may execute the computer executable instructions stored in the memory, so that the chip is enabled to perform the network connection control method in the foregoing method embodiments.

The electronic device 100, the computer storage medium, the computer program product, or the chip provided in the embodiments may be configured to perform the corresponding method provided above. Therefore, for beneficial effects that can be achieved, refer to the beneficial effects of the corresponding method provided above. Details are not described herein again.

Based on the foregoing descriptions of the implementations, a person skilled in the art may clearly understand that for convenience and ease of description, division of the foregoing function modules is merely used as an example for illustration. In actual application, the foregoing functions can be allocated to and implemented by different function modules based on needs. To be specific, an inner structure of an apparatus is divided into different function modules to implement all or some of the functions described above.

In the several embodiments provided in this application, it is to be understood that the disclosed system, apparatus, and method may be implemented in other manners. For example, the described apparatus embodiments are merely examples. For example, division into the modules or units is merely logical function division, and may be other division in actual implementation. For example, a plurality of units or components may be combined or may be integrated into another apparatus, or some features may be ignored or not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in different places. Some or all of the units may be selected according to actual needs to achieve the objectives of the solutions of the embodiments.

In addition, functional units in the embodiments of this application may be integrated into one processing unit, or each of the units may be physically separated, or two or more units may be integrated into one unit. The integrated unit may be implemented in the form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods in the embodiments of this application. The foregoing storage medium includes: various media that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of this application, rather than limiting the technical solutions of this application. Although this application is described in detail with reference to the example embodiments, a person of ordinary skill in the art should understand that modifications or equivalent replacements may be made to the technical solutions of this application, without departing from the spirit and scope of the technical solutions of this application.

## Claims

1. A network connection control method, applied to a terminal device, wherein the method comprises:
acquiring, by the terminal device, network hotspot information of a second network when connected to a first network, wherein a network rate of the second network is higher than a network rate of the first network;
sending a prompt message to prompt that a network hotspot of the second network exists if it is determined that the network hotspot information of the second network satisfies a preset condition; and
connecting the terminal device to the second network if it is detected that the terminal device is not connected to the second network within preset time after the prompt message is sent.

2. The network connection control method according to claim 1, wherein the acquiring network hotspot information of a second network comprises:
receiving broadcast information sent by a network device of the second network; and
parsing the network hotspot information of the second network from the broadcast information, wherein the network hotspot information of the second network comprises a device identification number of the network device of the second network, an identification number of the network hotspot of the second network, and a network identification number of the second network.

3. The network connection control method according to claim 2, wherein the method further comprises:
acquiring a device identification number of a network device of the first network, an identification number of a network hotspot of the first network, and a network identification number of the first network.

4. The network connection control method according to claim 3, wherein the determining that the network hotspot information of the second network satisfies a preset condition comprises:
determining that the network hotspot information of the second network satisfies the preset condition if the device identification number of the network device of the second network is the same as the device identification number of the network device of the first network and the identification number of the network hotspot of the second network is the same as the identification number of the network hotspot of the first network.

5. The network connection control method according to claim 3, wherein the determining that the network hotspot information of the second network satisfies a preset condition comprises:
determining that the network hotspot information of the second network satisfies the preset condition if the device identification number of the network device of the second network is different from the device identification number of the network device of the first network but the network identification number of the second network matches the network identification number of the first network.

6. The network connection control method according to claim 5, wherein the matching the network identification number of the second network with the network identification number of the first network comprises the following:
partial fields of the network identification number of the second network are the same as those of the network identification number of the first network.

7. The network connection control method according to claim 1, wherein the connecting the terminal device to the second network device comprises:
acquiring a login password of the first network if it is detected that the terminal device is in a screen-off state; and
sending a connection request carrying the login password of the first network to the network hotspot of the second network, and connecting to the network hotspot of the second network after verification of the login password succeeds.

8. The network connection control method according to claim 7, wherein after the sending a connection request carrying the login password of the first network to the network hotspot of the second network, and connecting to the network hotspot of the second network after verification of the login password succeeds, the method further comprises:
disconnecting a connection between the terminal device and the second network, and recording the network hotspot information of the second network in a network list; and
sending the connection request carrying the login password of the first network to a network hotspot of the first network, and connecting to the network hotspot of the first network after verification of the login password succeeds.

9. The network connection control method according to claim 8, wherein after disconnecting the connection between the terminal device and the second network, the method further comprises:
prompting a user that the terminal device has automatically selected a hotspot of the second network for connection, and prompting the user that the terminal device may be connected to the second network by selecting the network hotspot information, recorded in the network list, of the second network.

10. The network connection control method according to claim 8, wherein after disconnecting the connection between the terminal device and the second network, the method further comprises:
connecting the terminal device to the second network, when connected to the first network, if it is detected that a network rate of the terminal device decreases to a preset speed value.

11. The network connection control method according to claim 8, wherein after disconnecting the connection between the terminal device and the second network, the method further comprises:
connecting the terminal device to the second network, when connected to the first network, if it is detected that a network signal quality of the terminal device decreases to a preset signal quality value.

12. The network connection control method according to claim 1, wherein the connecting the terminal device to the second network device comprises:
acquiring a login password of the first network from a network list if it is determined that the terminal device is in a screen-off state; and
sending the connection request to the network hotspot of the second network through the login password of the first network, and connecting to a network hotspot of the first network after verification of the connection request fails.

13. The network connection control method according to claim 1, wherein the acquiring network hotspot information of a second network comprises: acquiring a network signal intensity of the second network, and acquiring the network hotspot information of the second network when the network signal intensity is less than a preset signal intensity value.

14. The network connection control method according to any one of claims 1 to 13, wherein the sending a prompt message to prompt that a network hotspot of the second network exists comprises:
prompting that the network hotspot of the second network exists through notification information, wherein a notification message comprises a link address of a network connection interface, and the network connection interface is a network connection interface of the second network.

15. A terminal device, comprising a processor and a memory, wherein the processor is connected to the memory,
the memory is configured to store a program instruction; and
the processor is configured to read the program instruction stored in the memory to implement the network connection control method according to any one of claims 1 to 14.

16. A computer-readable storage medium, wherein the computer-readable storage medium stores a computer instruction, and the computer instruction, when run on a terminal device, causes the terminal device to execute the network connection control method according to any one of claims 1 to 14.
